# EUROPEAN PATENT APPLICATION

(11) **EP 2 287 258 A1**
(43) Date of publication of application: **23.02.2011**
(21) Application number: 10173368.1
(22) Date of filing: 19.08.2010
(51) Int. Cl.: C09D 11/00

(54) **Aqueous colorant dispersion, method of producing aqueous colorant dispersuion, and aqueous ink for inkjet recording**

(30) Priority: 19.08.2009 JP 2009190341; 16.08.2010 JP 2010181879
(71) Applicant: Fujifilm Corporation, Minato-ku Tokyo 106-8620 (JP)
(72) Inventor: Kuwabara, Tomoko, Kanagawa (JP); Nishimura, Naoko, Kanagawa (JP); Shibata, Naoya, Kanagawa (JP)
(74) Representative: HOFFMANN EITLE

(57) **Abstract**

An aqueous colorant dispersion includes a colorant (A), a polymer (B) having an acid value of 85 mgKOH/g or higher, and an aqueous liquid medium (I), wherein the polymer (B) is a copolymer including at least one hydrophobic structural unit (a) which contains an aromatic ring linked to an atom in the main chain of the polymer (B) via a linking group, and comprising at least one hydrophilic structural unit (b) at a content of from 12% by mass to 20% by mass relative to the entire mass of the polymer (B), wherein the content of the aromatic ring is from 10% by mass to less than 21% by mass relative to the entire mass of the polymer (B).

## Description

### BACKGROUND OF THE INVENTION

### Field of the Invention

The present invention relates to an aqueous colorant dispersion having excellent colorant dispersion properties and excellent anti-sedimentation stability during storage, a method of producing an aqueous colorant dispersion, and an aqueous ink for inkjet recording.

### Description of the Related Art

Aqueous dispersions in which a water-insoluble solid, such as a pigment, is dispersed in water have recently been widely used as inkjet recording ink and the like. Aqueous inks for inkjet recording are requested to have properties including, similarly to oil-based inks, film gloss, clarity, and coloring power as well as temporal stability of viscosity and dispersed particle diameter and anti-sedimentation stability during storage. However, most aqueous inks have inferior properties as inkjet recording inks, such as pigment dispersion properties, compared to oil-based inks. As a result, satisfactory quality is hard to obtain with aqueous inks.
In consideration of the above circumstances, use of various additives, such as resins for dispersing pigment for aqueous system and surfactants, has been studied. However, an aqueous ink that has satisfactory stability over time and anti-sedimentation stability during storage, and that is comparable to the existing high-quality oil-based inks, has not been obtained.

In order to deal with these problems, Japanese Patent No. 4,109,713 discloses, for example, an aqueous dispersion containing a pigment coated with a resin having a polyether structure and having an acid value of from 5 mgKOH/g to 70 mgKOH/g.

Another examples is an ink described in Japanese Patent Application Laid-open (JP-A) No. 2006-176623, which contains a pigment dispersant containing a water-insoluble vinyl polymer having an arylalkyl group or an aryl group and a pigment having a quinacridone skeleton.

Further example is an aqueous colorant dispersion disclosed in a recent publication, JP-A No. 2009-084494. This aqueous dispersion contains a polymer having a benzene ring that is not directly linked to the main chain and that has an acid value of from 10 mgKOH/g to 85 mgKOH/g.

### SUMMARY OF THE INVENTION

However, the adsorption power of the polymer for covering the pigment towards the pigment is weak in the technique described in Japanese Patent No. 4,109,713, and properties of the aqueous ink are not satisfactory, particularly in regard to the diameter of the dispersed particles. In the technique described in JP-A No. 2006-176623, the particle diameter and viscosity change after dispersion, and the stability over time is not satisfactory.
In all of the aqueous dispersions disclosed in Japanese Patent No. 4,109,713 and JP-A Nos. 2006-176623 and 2009-084494, sedimentation occurs during storage in some cases, and the aqueous dispersions are hard to store stably in some cases.

The present invention has been made in view of the above problems in the conventional art. An object of the present invention is provision of an aqueous colorant dispersion in which a colorant is finely dispersed and sedimentation hardly occurs during storage, and which has excellent stability over time, and a method of producing the aqueous colorant dispersion. Another object of the invention is provision of an aqueous ink for inkjet recording that offers excellent ejection stability and ejection properties.

Aspects of the invention include the following.
<1> An aqueous colorant dispersion including a colorant, a polymer (B) having an acid value of 85 mgKOH/g or higher, and an aqueous liquid medium, wherein the polymer (B) is a copolymer including at least one hydrophobic structural unit (a) which contains an aromatic ring linked to an atom in the main chain of the polymer (B) via a linking group, and comprising at least one hydrophilic structural unit at a content of from 12% by mass to 20% by mass relative to the entire mass of the polymer (B), wherein the content of the aromatic ring is from 10% by mass to less than 21% by mass relative to the entire mass of the polymer (B).
<2> An aqueous colorant dispersion as described in <1>, wherein the at least one hydrophobic structural unit (a) includes a structural unit represented by the following Formula (1):

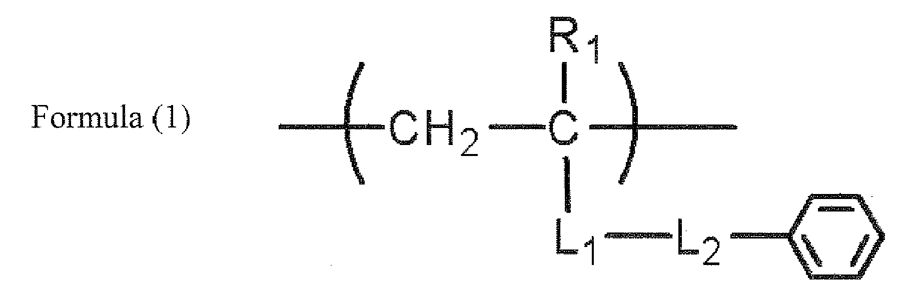

In Formula (1), R₁ represents a hydrogen atom, a methyl group, or a halogen atom; L₁ represents *-COO-, *-OCO-, *-CONR₂-, *-O-, or a substituted or unsubstituted phenylene group; R₂ represents a hydrogen atom or an alkyl group having from 1 to 10 carbon atoms; *-represents a bonding to the main chain; and L₂ represents a single bond or a divalent linking group having from 1 to 30 carbon atoms.

<3> An aqueous colorant dispersion as described in <1> or <2>, wherein the at least one hydrophobic structural unit (a) includes at least one of a structural unit derived from phenoxyethyl acrylate or a structural unit derived from phenoxyethyl methacrylate.
<4> An aqueous colorant dispersion as described in any one of <1> to <3>, wherein the at least one hydrophobic structural unit (a) includes a structural unit derived from phenoxyethyl acrylate or phenoxyethyl methacrylate, and the total proportion of structural units derived from phenoxyethyl acrylate and structural units derived from phenoxyethyl methacrylate is from 40% by mass to 53% by mass relative to the polymer (B).

<5> An aqueous colorant dispersion as described in any one of <1> to <4>, wherein the at least one hydrophilic structural unit has at least one anionic group selected from a carboxyl group, a phosphoric acid group, or a sulfonic acid group.

<6> An aqueous colorant dispersion as described in any one of <1> to <5>, wherein the at least one hydrophilic structural unit includes at least one of a structural unit derived from acrylic acid or a structural unit derived from methacrylic acid.
<7> An aqueous colorant dispersion as described in any one of <1> to <6>, wherein the acid value of the polymer (B) is from 85 mgKOH/g to 125 mgKOH/g.
<8> An aqueous colorant dispersion as described in any one of <1> to <7>, wherein the polymer (B) further includes at least one hydrophobic structural unit derived from an acrylic or methacrylic ester of an alkyl having from 1 to 6 carbon atoms.
<9> An aqueous colorant dispersion as described in <8>, wherein the at least one hydrophobic structural unit derived from an acrylic or methacrylic ester of an alkyl having from 1 to 6 carbon atoms includes at least one of a hydrophobic structural unit derived from methyl acrylate, a hydrophobic structural unit derived from methyl methacrylate, a hydrophobic structural unit derived from ethyl acrylate, or a hydrophobic structural unit derived from ethyl methacrylate.
<10> An aqueous colorant dispersion as described in any one of <1> to <9>, wherein the polymer (B) has a weight average molecular weight (Mw) of from 30,000 to 100,000.

<11> An aqueous colorant dispersion as described in any one of <1> to <10>, wherein the colorant is a pigment.
<12> An aqueous colorant dispersion as described in <11>, wherein the colorant is a pigment having an azo skeleton or a quinacridone skeleton.
<13> An aqueous colorant dispersion as described in <12>, wherein the colorant is at least one of C.I. Pigment Red 122 or C.I. Pigment Yellow 74.
<14> A method of producing an aqueous colorant dispersion of any one of <1> to <13>, including adding a solution (III) containing water as a main component and a basic substance to a mixture (II) of a colorant, the polymer (B), and an organic solvent, and removing the organic solvent so as to produce the aqueous colorant dispersion.
<15> An aqueous ink for inkjet recording, including the aqueous colorant dispersion described in any one of <1> to <13>.

According to the invention, an aqueous colorant dispersion in which a colorant is finely dispersed and sedimentation does not occur during storage, and which has excellent stability over time, and a method of producing the aqueous colorant dispersion are provided.
According to the invention, an aqueous ink for inkjet recording that offers excellent ejection stability and ejection properties is further provided.

### DESCRIPTION OF THE INVENTION

An aqueous colorant dispersion of the invention includes a colorant (hereinafter referred to as "colorant (A)"), a polymer having an acid value of 85 mgKOH/g or higher (hereinafter referred to as "polymer (B)"), and an aqueous liquid medium (hereinafter referred to as "aqueous liquid medium (I)), wherein the polymer (B) is a copolymer including at least one hydrophobic structural unit (hereinafter referred to as "hydrophobic structural unit (a)") that contains an aromatic ring bonded to an atom in the main chain of the polymer (B) via a linking group and at least one hydrophilic structural unit (hereinafter referred to as "hydrophilic structural unit (b)") of which the content is from 12% by mass to 20% by mass relative to the entire mass of the polymer (B), and the content of the aromatic ring is from 10% by mass to less than 21 % by mass relative to the entire mass of the polymer (B).

In the invention, this configuration offers a stable aqueous colorant dispersion which has excellent stability over time and in which dispersed particles hardly sediment during storage.
Specifics of the invention are described below.

### Colorant (A)

The colorant (A) in the invention is described in detail.
The colorant in the invention may be selected from known dyes, pigments, and the like, without particular limitations. From the viewpoint of ink coloring properties, the colorant is preferably almost completely insoluble in water or scarcely soluble in water. Specifically, examples of the colorant include various pigments, disperse dyes, oil-soluble dyes, and colorants that form J aggregates. Pigments are more preferable from the viewponit of light fastness.

The pigment used in the invention is not particularly limited, and may be selected appropriately in accordance with the purpose. The pigment may be an organic pigment or an inorganic pigment.
Examples of the organic pigment include azo pigments, polycyclic pigments, dye chelates, nitro pigments, nitroso pigments, and aniline black. Of these, azo pigments and polycyclic pigments are more preferable. Examples of the azo pigments include azo lakes, insoluble azo pigments, condensed azo pigments, and chelate azo pigments. Examples of the polycyclic pigments include phthalocyanine pigments, perylene pigments, perinone pigments, anthraquinone pigments, quinacridone pigments, dioxazine pigments, indigo pigments, thioindigo pigments, isoindolinone pigments, and quinophthalone pigments. Examples of the dye chelates include basic dye chelates and acidic dye chelates.
Examples of the inorganic pigments include titanium oxide, iron oxide, calcium carbonate, barium sulfate, aluminum hydroxide, barium yellow, cadmium red, chrome yellow, and carbon black. Of these, carbon black is particularly preferable. Examples of the carbon black include carbon black produced by a known method such as a contact method, a furnace method, or a thermal method.

Examples of the carbon black include, but are not limited to, RAVEN7000, RAVEN5750, RAVEN5250, RAVEN5000 ULTRAII, RAVEN 3500, RAVEN2000, RAVEN1500, RAVEN1250, RAVEN1200, RAVEN 1190 ULTRAII, RAVEN1170, RAVEN1255, RAVEN1080, RAVEN1060, and RAVEN700 (tradenames, manufactured by Columbian Carbon Japan Ltd.), REGAL400R, REGAL330R, REGAL660R, MOGUL L, BLACK PEARLS L, MONARCH 700, MONARCH 800, MONARCH 880, MONARCH 900, MONARCH 1000, MONARCH 1100, MONARCH 1300, and MONARCH 1400 (tradenames, manufactured by Cabot Corporation), COLOR BLACK FW I, COLOR BLACK FW2, COLOR BLACK FW2V, COLOR BLACK 18, COLOR BLACK FW200, COLOR BLACK S150, COLOR BLACK S160, COLOR BLACK S170, PRINTEX35, PRINTEX U, PRINTEX V, PRINTEX140U, PRINTEX140V, SPECIAL BLACK 6, SPECIAL BLACK 5, SPECIAL BLACK 4A, and SPECIAL BLACK4 (tradenames, manufactured by Degussa Japan Co., Ltd.), and No.25, No.33, No.40, No.45, No.47, No.52, No.900, No.2200B, No.2300, MCF-88, MA600, MA7, MA8, and MA100 (tradenames, manufactured by Mitsubishi Chemical Corporation).

Examples of organic pigments for yellow inks that can be used in the invention include C.I. Pigment Yellow 1, 2, 3, 4, 5, 6, 7, 10, 11, 12, 13, 14, 14C, 16, 17, 24, 34, 35, 37, 42, 53, 55, 65, 73, 74, 75, 81, 83, 93, 95, 97, 98, 100, 101, 104, 108, 109, 110, 114, 117, 120, 128, 129, 138, 150, 151, 153, 154, 155, and 180. Pigments having an azo skeleton are preferable, and C.I. Pigment Yellow 74 is most preferable from the viewpoints of availability and price.

Examples of pigments for magenta inks include C.I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 48(Ca), 48(Mn), 48:2, 48:3, 48:4, 49, 49:1, 50, 51, 52, 52:2, 53:1, 53, 55, 57 (Ca), 57:1, 60, 60:1, 63:1, 63:2, 64, 64:1, 81, 83, 87, 88, 89, 90, 101 (red iron oxide), 104, 105, 106, 108 (cadmium red), 112, 114, 122 (quinacridone magenta), 123, 146, 149, 163, 166, 168, 170, 172, 177, 178, 179, 184, 185, 190, 193, 202, 209, 219, and 269, and C.I. Pigment Violet 19. Pigments having a quinacridone skeleton are preferable, and C.I. Pigment Red 122 is most preferable.

Examples of pigments for cyan inks include C.I. Pigment Blue 1, 2, 3, 15, 15:1, 15:2, 15:3, 15:34, 16, 17:1, 22, 25, 56, and 60, and C.I. Vat Blue 4, 60, and 63. C.I. Pigment Blue 15:3 is particularly preferable.
These pigments may be used singly, or two or more pigments may be selected from the above pigment groups and may be used in combination. The two or more pigments may be selected from the same pigment group or different pigment groups.

The amount of colorant contained in the aqueous colorant dispersion is preferably from 0.1% by mass to 20% by mass, more preferably from 0.2% by mass to 15% by mass, and particularly preferably from 0.5% by mass to 10% by mass, relative to the total amount of solids contained in the aqueous colorant dispersion, from the viewpoints of, for example, ink coloring properties and storage stability.

### Polymer (B)

The polymer (B) in the invention is described in detail below.
The polymer (B) is a copolymer having an acid value of 85 mgKOH/g or higher, and including at least one hydrophobic structural unit (a) that contains an aromatic ring bonded to an atom in the main chain of the polymer (B) via a linking group and at least one hydrophilic structural unit (b) of which the content is from 12% by mass to 20% by mass relative to the entire mass of the polymer (B), and the content of the aromatic ring is from 1 0% by mass to less than 21% by mass relative to the entire mass of the polymer (B).
The polymer (B) is used as a dispersant of the colorant (A).
The structure of the polymer (B) includes at least one hydrophobic structural unit and at least one hydrophilic structural unit.

### <Hydrophobic Structural Unit>

The at least one hydrophobic structural unit of the polymer (B) in the invention includes, as hydrophobic structural unit(s), at least one hydrophobic structural unit (a) that contains at least an aromatic ring bonded to an atom in the main chain of the polymer (B) via a linking group wherein the content of the aromatic ring is from 10% by mass to less than 21 % by mass relative to the entire mass of the polymer (B) (hereinafter simply referred to as "hydrophobic structural unit (a)" in some cases), and may further include one or more other hydrophobic structural units, as necessary.

### Hydrophobic Structural Unit (a)

The hydrophobic structural unit (a) has an aromatic ring that is bonded to an atom in the main chain of the polymer (B) via a linking group. The expression "via a linking group" indicates a structure in which the aromatic ring and the atom in the main chain structure of the polymer are bonded to each other via a linking group. With this structure, an appropriate distance between the aromatic ring, which is hydrophobic, and hydrophilic structural units in the polymer (B) is maintained, as a result of which the interaction between the polymer (B) and the colorant (A) is enhanced. Consequently, the polymer (B) strongly adsorbs to the colorant (A), thereby improving the dispersibility.

In the invention, when the polymer (B) in the invention is a branched polymer such as a graft polymer, a dendritic polymer, or a star polymer, atoms forming a side chain or branched polymer of the graft polymer or the dendrite polymer are also considered as atoms in the main chain, and, similarly, atoms forming an arm polymer of the star polymer are also considered as atoms in the main chain.

The proportion of the hydrophobic structural unit (a), which contains an aromatic ring bonded to an atom in the main chain of the polymer (B) via a linking group, relative to the entire mass of the polymer (B), may vary depending on the type of the aromatic ring, and is preferably from 25% by mass to less than 83% by mass, more preferably from 30% by mass to less than 80% by mass, and particularly preferably from 40% by mass to less than 75% by mass, relative to the entire mass of the polymer (B) provided that the content of the aromatic ring is within the required range described above.

In the invention, the aromatic ring in the hydrophobic structural unit (a) is preferably a substituted or unsubstituted benzene ring or a substituted or unsubstituted naphthalene ring, and examples of preferable substituents include alkyl groups, alkyloxy groups, halogen atoms, a cyano group, and a nitro group. The aromatic ring in the hydrophobic structural unit (a) is particularly preferably an unsubstituted benzene ring from the viewpoints of dispersibility, availability, and versatility of the colorant (A).

A particularly preferable example of the hydrophobic structural unit (a) containing an aromatic ring bonded to an atom in the main chain of the polymer (B) via a linking group is a structural unit represented by the following Formula (1).

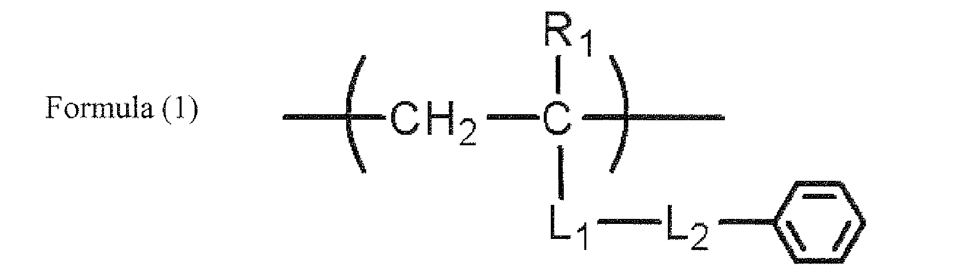

In Formula (1), R₁ represents a hydrogen atom, a methyl group, or a halogen atom; L₁ represents *-COO-, *-OCO-, *-CONR₂-, *-O-, or a substituted or unsubstituted phenylene group; R₂ represents a hydrogen atom or an alkyl group having from 1 to 10 carbon atoms; * represents a bonding to the main chain; and L₂ represents a single bond or a divalent linking group having from 1 to 30 carbon atoms, more preferably represents a linking group having from 1 to 25 carbon atoms, and particularly preferably represents a linking group having from 1 to 20 carbon atoms. The divalent linking group may be saturated or unsaturated, may have a linear structure or at least one of a branched structure or a cyclic structure, and may contain a heteroatom selected from O, N, or S.
Examples of a substituent contained in the substituted phenylene group include, but are not limited to, halogen atoms, alkyl groups, alkoxy groups, a hydroxyl group, and a cyano group.

In the Formula (1) above, it is preferable that R₁ represents a hydrogen atom or a methyl group, L₁ represents *-COO-, and L₂ represents a divalent linking group having from 1 to 15 carbon atoms, it is more preferable that R₁ represents a hydrogen atom or a methyl group, L₁ represents *-COO-, and L₂ represents a divalent linking group containing an alkylene or oxyalkylene group having from 1 to 12 carbon atoms (more preferably, from 1 to 3 carbon atoms).
The polymer (B) may include structural unit(s) derived from at least one selected from benzyl acrylate, benzyl methacrylate, phenoxyethyl acrylate, phenoxyethyl methacrylate, an oligoethyleneglycol monophenyl ether acrylate in which the repetition number of the ethyleneglycol unit is from about 2 to about 6, or an oligoethyleneglycol monophenyl ether methacrylate in which the repetition number of the ethyleneglycol unit is from about 2 to about 6, which are monomers corresponding to structural units within the above scope. Of these monomers, 2-phenoxyethyl acrylate or 2-phenoxyethyl methacrylate is preferable, and 2-phenoxyethyl methacrylate is most preferable.

When the polymer (B) includes a structural unit derived from phenoxyethyl acrylate or phenoxyethyl methacrylate as a structural unit represented by the above Formula (1), the total content of structural units derived from phenoxyethyl acrylate and structural units derived from phenoxyethyl methacrylate relative to the entire mass of the polymer (B) is preferably from 40% by mass to 53% by mass, more preferably from 45% by mass to 53% by mass, and particularly preferably from 48% by mass to 53% by mass.

The total content of the aromatic ring(s) of the at least one hydrophobic structural unit (a) is preferably from 10% by mass to less than 21 % by mass, and more preferably from 12% by mass to less than 21% by mass, relative to the entire mass of the polymer (B), from the viewpoint of improving the dispersibility of the colorant (particularly, pigment). When the content of the aromatic ring(s) of the at least one hydrophobic structural unit (a) is less than 10% by mass, the dispersibility of the colorant (particularly, pigment) deteriorates. When the content of the aromatic ring(s) of the at least one hydrophobic structural unit (a) is 21 % by mass or higher, dispersion properties over time deteriorates. Therefore, a content outside the range of from 10% by mass to less than 21% by mass is not preferable.
Here, the expression "... structural unit ... derived from ... (A)" used herein means a component in a polymer which component is formed by the binding of (A) to an adjacent structural unit or units.

The polymer (B) in the invention preferably further include a hydrophobic structural unit (hereinafter referred to as "hydrophobic structural unit (c)" in some cases) other than the hydrophobic structural unit (a).
The monomer for forming a hydrophobic structural unit (c) is not particularly limited as long as the monomer has a functional group capable of forming a polymer and a hydrophobic functional group, and any known monomer may be used. The monomer for forming a hydrophobic structural units (c) is preferably a vinyl monomer (such as a (meth)acrylate, a (meth)acrylamide, a styrenic compound, or a vinyl ester), from the viewpoints of availability, handling properties, and versatility.

Inclusion of the hydrophobic structural unit (c) in the polymer (B) imparts further improved dispersion properties to the aqueous colorant dispersion of the invention. Although the details of the mechanism thereof are unclear, the mechanism is conjectured to be as follows.
The polymer (B) includes the hydrophobic structural unit (a), which exhibits affinity mainly for a colorant, and the hydrophilic structural unit (b), exhibiting affinity mainly for an aqueous medium. Thus, the hydrophobic structural unit (a) and the hydrophilic structural unit (b) have opposite properties in this respect. The hydrophobic structural unit (c) (particularly, a structural unit derived from an acrylic or methacrylic ester of an alkyl having from 1 to 6 carbon atoms) has affinity properties that are intermediate between the hydrophobic structural unit (a) and the hydrophilic structural unit (b). The inclusion of the hydrophobic structural unit (c) allows the hydrophobic structural unit (a) and the hydrophilic structural unit (b) to perform their respective functions more effectively without interfering with each other, as a result of which the dispersion properties of the aqueous colorant dispersion are further improved.

The hydrophobic structural unit (c) is preferably contained in the polymer (B) at a proportion of more than 30% by mass or more, more preferably from more than 30% by mass to 50% by mass, still more preferably from more than 33% by mass to 40% by mass, and particularly preferably from 33% by mass to 37% by mass, relative to the entire mass of the polymer (B).

The hydrophobic structural unit (c) may be formed by polymerizing monomers including a monomer corresponding to the hydrophobic structural unit (c). It is also possible to introduce the hydrophobic functional group into a polymer chain after the formation of a polymer by polymerization, so as to form the hydrophobic structural unit (c).
Examples the (meth)acrylate as a vinyl monomer include alkyl (meth)acrylates such as methyl (meth)acrylate, ethyl (meth)acrylate, (n- or iso-)propyl (meth)acrylate, (n-, iso-, or tert-)butyl (meth)acrylate, 2-ethylhexyl (meth)acrylate, (n- or iso-)octyl (meth)acrylate, (n- or iso-)decyl (meth)acrylate, and (n- or iso-)stearyl (meth)acrylate, among which (meth)acrylic esters of an alkyl having from 1 to 6 carbon atoms are preferable, (meth)acrylic esters of an alkyl having from 1 to 4 carbon atoms are more preferable, and (meth)acrylic ester of an alkyl having 1 carbon is further preferable.

Examples of the (meth)acrylamide include (meth)acrylamide, N-methyl(meth)acrylamide, N-ethyl(meth)acrylamide, N-propyl(meth)acrylamide, N-isopropyl(meth)acrylamide, N-n-butyl(meth)acrylamide, N-t-butyl(meth)acrylamide, N-cyclohexyl (meth)acrylamide, N-(2-methoxyethyl)(meth)acrylamide, N,N-dimethyl(meth)acrylamide, N,N-diethyl(meth)acrylamide, vinyl(meth)acrylamide, N,N-diallyl(meth)acrylamide, and N-allyl(meth)acrylamide, among which (meth)acrylamide and N,N-dimethyl(meth)acrylamide are preferable.

Examples of the styrenic compound include styrene, methylstyrene, dimethylstyrene, trimethylstyrene, ethylstyrene, isopropylstyrene, n-butylstyrene, tert-butylstyrene, methoxystyrene, butoxystyrene, acetoxystyrene, chlorostyrene, dichlorostyrene, bromostyrene, chloromethylstyrene, hydroxystyrene protected with a group (e.g., t-Boc) that allows deprotection by an acidic substance, methyl vinylbenzoate, α-methylstyrene, and vinylnaphthalene, among which styrene and α-methylstyrene are preferable.

Examples of the vinyl ester include vinyl acetate, vinyl chloroacetate, vinyl proponate, vinyl butyrate, vinyl methoxyacetate, and vinyl benzoate, among which vinyl acetate is preferable.

Among those described above, the hydrophobic structural unit (c) is preferably a structural unit derived from a (meth)acrylic ester of an alkyl having from 1 to 6 carbon atoms, more preferably a structural unit derived from a (meth)acrylic ester of an alkyl having from 1 to 4 carbon atoms, still more preferably a structural unit derived from methyl acrylate, methyl methacrylate, ethyl acrylate, or ethyl methacrylate, and most preferably a structural unit derived from methyl methacrylate, from the viewpoint of improving pigment dispersibility.

### <Hydrophilic Structural Unit>

The at least one hydrophilic structural unit (hydrophilic structural unit (b)) contained in the polymer (B) in the invention is described in detail below.
The content of hydrophilic structural units contained in the polymer (B) is from 12% by mass to 20% by mass, and preferably from 13% by mass to 19% by mass, relative to the entire mass of the polymer (B). When the content of hydrophilic structural unit is less than 12% by mass, the anti-sedimentation properties of the colorant (particularly, pigment), particularly a yellow colorant, deteriorates. A content of hydrophilic structural units of more than 20% by mass is not preferable in respect of dispersibility.
The at least one hydrophilic structural unit (b) of the polymer (B) may include a hydrophilic structural unit (b') containing an anionic group (hereinafter simply referred to as "hydrophilic structural unit (b')" in some cases).

### (Hydrophilic structural unit (b') containing an anionic group)

The hydrophilic structural unit (b') containing an anionic group may be formed through polymerization of monomers including a monomer containing anionic group. Alternatively, the hydrophilic structural unit (b') may be formed by introducing an anionic group into a polymer chain of a polymer that has been obtained by polymerization of monomers not having an anionic group.
The anionic group may be a carboxyl group, a sulfonic acid group, or a phosphoric acid group, and is preferably a carboxyl group.
Examples of anionic group-containing monomers that can be used in the invention include, but are not limited to, those described below.

Examples of carboxyl group-containing monomers as anionic group-containing monomers include: unsaturated carboxylic acid monomers such as acrylic acid, methacrylic acid, crotonic acid, itaconic acid, maleic acid, fumaric acid, and citraconic acid; β-carboxyethylacrylic acid; and 2-methacryloyloxymethylsuccinic acid. Examples of sulfonic acid group-containing monomers as anionic group-containing monomers include styrenesulfonic acid, 2-acrylamido-2-methylpropanesulfonic acid, 3-sulfopropyl (meth)acrylate, and bis-(3-sulfopropyl) itaconate. Examples of phosphoric acid group-containing monomers as anionic group-containing monomers include vinylphosphonic acid, vinyl phosphate, bis(methacryloyloxyethyl) phosphate, diphenyl-2-acryloyloxyethyl phosphate, diphenyl-2-methacryloyloxyethyl phosphate, and dibutyl-2-acryloyloxyethyl phosphate.

Of these, unsaturated carboxylic acid monomers are preferable, acrylic acid and methacrylic acid are more preferable, and methacrylic acid is most preferable, from the viewpoints of ink viscosity and ejection properties. The anionic group-containing monomer may be used singly, or two or more thereof may be used in mixture.

The acid value of the polymer (B) in the invention may be 85 mgKOH/g or higher. When the polymer (B) includes an anionic group such as a carboxyl group, the acid value of the polymer (B) is preferably from 85 mgKOH/g to 140 mgKOH/g, more preferably from 90 mgKOH/g to 130 mgKOH/g, and most preferably from 90 mgKOH/g to 120 mgKOH/g, from the viewpoint of storage stability (suppression of sedimentation of dispersed particles during storage). Here, the acid value is defined as the mass (mg) of KOH required for completely neutralizing 1 g of the polymer (B), and can be measured by the method described in JIS (Japanese Industrial Standard) K0070 (1992). In the present invention, acid values are measured by the method described in JISK0070 (1992), which is incorporated herein by reference.
When the polymer (B) includes an anionic group such as a carboxylic acid group and the acid value of the polymer (B) is 85 mgKOH/g or higher, favorable properties are obtained with respect to charge repulsion between dispersed particles due to dissociated carboxyl groups, suppression of sedimentation over time, and improving storage stability. When the acid value of the polymer (B) is 140 mgKOH/g or lower, favorable properties are obtained with respect to hydrophilicity-hydrophobicity balance of the polymer, suppression of dissolution of polymer molecules that are not adsorbed to the colorant into the aqueous medium, sufficiency of dispersion, and provision of a small particle diameter of the dispersed particles.
The polymer (B) in the invention is preferably soluble in water, from the viewpoint of storage stability (suppression of sedimentation of dispersed particles during storage). The expression "soluble in water" or "water soluble" as used herein means that, after the polymer (B) is 100%-neutralized with sodium hydroxide, the amount of the polymer (B) that dissolves in 100 g of water at 25°C is 1 g or more. The amount of the 100%-neutralized polymer (B) that dissolves in 100 g of water is preferably 5 g or more, and more preferably 10 g or more.

The polymer (B) in the invention may be a random copolymer in which respective kinds of structural unit are introduced irregularly, or a block copolymer in which respective kinds of structural unit are introduced regularly. In the block copolymer, the respective structural units may be introduced in any order during the synthesis of the polymer (B), and the same kind of component may be used more than once. The polymer (B) is preferably a random copolymer from the viewpoints of versatility and productivity.

The weight average molecular weight (Mw) of the polymer (B) used in the invention is preferably from 10,000 to 200,000, more preferably from 20,000 to 100,000, and most preferably from 30,000 to 60,000, from the viewpoint of steric repulsion effects.
When the weight average molecular weight is within the above range, the steric repulsion effects as a dispersant tend to improve, and the time required for adsorption to the colorant tends to shorten due to steric effects. Therefore, a weight average molecular weight within the above range is preferable. A weight average molecular weight of the polymer (B) of 60,000 or less prevents the viscosity of the aqueous colorant dispersion from becoming excessively high and improves the handling properties. A weight average molecular weight of the polymer (B) of 30,000 or more improves stability of the aqueous colorant dispersion over time.
The molecular weight distribution of the polymer (B) (the value of the weight average molecular weight / the value of the number average molecular weight) is preferably from 1 to 6, and more preferably from 1 to 4.
A molecular weight distribution of the polymer (B) within the above range is preferable from the viewpoints of shortening the time required for dispersing a pigment and the stability of the dispersion over time. Here, the number average molecular weight and the weight average molecular weight are polystyrene-equivalent values obtained using a GPC analysis instrument in which TSKGEL GMHXL, TSKGEL G4000HXL, and TSKGEL G2000HXL (tradenames, all manufactured by TOSOH CORPORATION) are used as columns, using THF as an eluent, using a differential refractometer for detection, and using polystyrenes as standard substances.

The polymer used in the invention can be synthesized by various polymerization methods, such as solution polymerization, precipitation polymerization, suspension polymerization, bulk polymerization, and emulsion polymerization. The polymerization reaction can be performed using a known procedure, such as in a batch manner, semi-continuous manner, or continuous manner.
The method of initiating polymerization may be, for example, a method using a radical initiator or a method of irradiating light or a radiation. Polymerization methods and polymerization initiation methods are described in, for example, Teiji Tsuruta, "Kobunshi Gosei-Houhou (Polymer Synthesis Method)", revised edition, (NIKKAN KOGYO SHINBUN LTD., 1971) and Takayuki Otsu and Masayoshi Kinoshita, "Kobunshi-Gosei no Jikkenho (Experimental Technique of Polymer Synthesis)", (Kagaku-dojin Publishing Company Inc., 1972), pp. 124 to 154.
Among the above polymerization methods, a solution polymerization method using a radical initiator is preferable. The solvent to be used in the solution polymerization may be a single organic solvent, a mixture of two or more organic solvents, or a mixed solvent composed of water and at least one organic solvent. The organic solvent or organic solvents may be selected from ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methoanol, ethanol, 1-propanol, 2-propanol, or 1-butanol.
The polymerization temperature should be set in consideration of the molecular weight of the polymer and the type of the initiator. The polymerization temperature is usually in the range of from about 0 °C to about 100 °C, and preferably in the range of from 50 °C to 100 °C.
The reaction pressure may be set appropriately, and is usually from 1 kg/cm² to 100 kg/cm², and preferably from about 1 kg/cm² to about 30 kg/cm². The reaction time may be about 5 to 30 hours. The resultant polymer may be purified by, for example, reprecipitation.

Preferable examples of the polymer (B) in the invention include, but are not limited to, those shown below.

| | | | | | | | | | | | | |
|---|---|---|---|---|---|---|---|---|---|---|---|---|
| 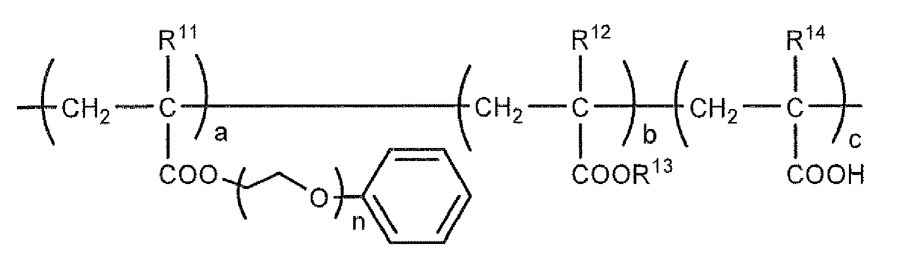 | | | | | | | | | | | | |

| | R¹¹ | R¹² | R¹³ | R¹⁴ | n | a | b | c | Content of aromatic rings (Mass%) | Mw | Mw/Mn | Acid Value [mgKOH/g] |
|---|---|---|---|---|---|---|---|---|---|---|---|---|
| B-1 | CH₃ | CH₃ | CH₃ | CH₃ | 1 | 50 | 36.5 | 13.5 | 18.7 | 40,300 | 2.56 | 88.0 |
| B-2 | CH₃ | CH₃ | CH₃ | CH₃ | 1 | 50 | 36 | 14 | 18.7 | 41,200 | 2.66 | 91.2 |
| B-3 | CH₃ | CH₃ | CH₃ | CH₃ | 1 | 50 | 35 | 15 | 18.7 | 40,500 | 2.57 | 97.8 |
| B-4 | CH₃ | CH₃ | CH₃ | CH₃ | 1 | 50 | 34 | 16 | 18.7 | 40,100 | 2.46 | 104.3 |
| B-5 | CH₃ | CH₃ | CH₃ | CH₃ | 1 | 50 | 33 | 17 | 18.7 | 42,000 | 2.69 | 110.8 |
| B-6 | CH₃ | CH₃ | CH₃ | CH₃ | 1 | 50 | 32 | 18 | 18.7 | 40,300 | 2.55 | 117.3 |
| B-7 | CH₃ | CH₃ | CH₃ | CH₃ | 1 | 50 | 31 | 19 | 18.7 | 41,300 | 2.68 | 123.8 |
| B-8 | CH₃ | CH₃ | CH₃ | CH₃ | 1 | 50 | 36 | 14 | 18.7 | 27,000 | 2.36 | 91.2 |
| B-9 | CH₃ | CH₃ | CH₃ | CH₃ | 1 | 50 | 36 | 14 | 18.7 | 33,000 | 2.42 | 91.2 |
| B-10 | CH₃ | CH₃ | CH₃ | CH₃ | 1 | 50 | 36 | 14 | 18.7 | 50,100 | 2.69 | 91.2 |
| B-11 | CH₃ | CH₃ | CH₃ | CH₃ | 1 | 50 | 36 | 14 | 18.7 | 65,000 | 2.72 | 91.2 |
| B-12 | CH₃ | CH₃ | CH₃ | CH₃ | 1 | 50 | 36 | 14 | 18.7 | 98,000 | 2.88 | 91.2 |
| B-13 | CH₃ | CH₃ | CH₃ | CH₃ | 1 | 50 | 35 | 15 | 18.7 | 35,000 | 2.39 | 97.8 |
| B-14 | CH₃ | CH₃ | CH₃ | CH₃ | 1 | 50 | 35 | 15 | 18.7 | 50,300 | 2.71 | 97.8 |
| B-15 | CH₃ | CH₃ | CH₃ | CH₃ | 1 | 50 | 35 | 15 | 18.7 | 69,000 | 2.78 | 97.8 |
| B-16 | CH₃ | CH₃ | CH₃ | CH₃ | 1 | 50 | 35 | 15 | 18.7 | 96,000 | 2.89 | 97.8 |
| B-17 | CH₃ | CH₃ | CH₃ | CH₃ | 1 | 50 | 34 | 16 | 18.7 | 35,000 | 2.43 | 104.3 |
| B-18 | CH₃ | CH₃ | CH₃ | CH₃ | 1 | 50 | 34 | 16 | 18.7 | 52,200 | 2.67 | 104.3 |
| B-19 | CH₃ | CH₃ | CH₃ | CH₃ | 1 | 50 | 34 | 16 | 18.7 | 63,000 | 2.69 | 104.3 |
| B-20 | CH₃ | CH₃ | CH₃ | CH₃ | 1 | 50 | 34 | 16 | 18.7 | 93,000 | 2.83 | 104.3 |
| B-21 | CH₃ | CH₃ | CH₃ | CH₃ | 1 | 54 | 32 | 14 | 20.2 | 41,200 | 2.58 | 91.2 |
| B-22 | CH₃ | CH₃ | CH₃ | CH₃ | 1 | 46 | 40 | 14 | 17.2 | 39,000 | 2.49 | 91.2 |
| B-23 | CH₃ | CH₃ | CH₃ | CH₃ | 1 | 35 | 51 | 14 | 13.1 | 40,200 | 2.53 | 91.2 |
| B-24 | CH₃ | CH₃ | CH₃ | H | 1 | 50 | 36 | 14 | 18.7 | 40,200 | 2.57 | 109.0 |
| B-25 | CH₃ | H | CH₃ | CH₃ | 1 | 50 | 35 | 15 | 18.7 | 41,100 | 2.51 | 97.8 |
| B-26 | CH₃ | H | CH₃ | H | 1 | 50 | 36 | 14 | 18.7 | 40,800 | 2.58 | 109.0 |
| B-27 | CH₃ | H | C₂H₅ | CH3 | 1 | 50 | 35 | 15 | 18.7 | 42,200 | 2.61 | 97.8 |
| B-28 | CH₃ | H | C₂H₅ | H | 1 | 50 | 36 | 14 | 18.7 | 40,700 | 2.57 | 109.0 |
| B-29 | H | CH₃ | CH₃ | CH₃ | 1 | 45 | 40 | 15 | 18.0 | 40,200 | 2.53 | 97.8 |
| B-30 | H | CH₃ | CH₃ | CH₃ | 1 | 49 | 36 | 15 | 19.8 | 30,600 | 2.33 | 97.8 |
| B-31 | H | CH₃ | C₂H₅ | CH₃ | 1 | 45 | 40 | 15 | 18.0 | 43,100 | 2.65 | 97.8 |
| B-32 | H | CH₃ | C₂H₅ | CH₃ | 1 | 49 | 36 | 15 | 19.8 | 33,900 | 2.34 | 97.8 |
| B-33 | H | CH₃ | CH₃ | H | 1 | 45 | 41 | 14 | 18.0 | 40,300 | 2.58 | 109.0 |
| B-34 | H | CH₃ | CH₃ | H | 1 | 49 | 36 | 15 | 19.8 | 35,000 | 2.41 | 116.8 |
| B-35 | H | H | CH₃ | CH₃ | 1 | 45 | 40 | 15 | 18.0 | 41,400 | 2.61 | 97.8 |
| B-36 | H | H | CH₃ | CH₃ | 1 | 49 | 36 | 15 | 19.8 | 34,700 | 2.39 | 97.8 |
| B-37 | H | H | CH₃ | H | 1 | 45 | 41 | 14 | 18.0 | 40,800 | 2.57 | 109.0 |
| B-38 | H | H | CH₃ | H | 1 | 49 | 36 | 15 | 19.8 | 34,700 | 2.39 | 116.8 |
| B-39 | H | H | C₂H₅ | CH₃ | 1 | 45 | 40 | 15 | 18.0 | 40,200 | 2.55 | 97.8 |
| B-40 | H | H | C₂H₅ | CH₃ | 1 | 49 | 36 | 15 | 19.8 | 38,000 | 2.51 | 97.8 |
| B-41 | H | H | C₂H₅ | H | 1 | 45 | 41 | 14 | 18.0 | 40,100 | 2.53 | 109.0 |
| B-42 | H | H | C₂H₅ | H | 1 | 49 | 36 | 15 | 19.8 | 33,000 | 2.29 | 116.8 |
| B-43 | CH₃ | CH₃ | CH₃ | CH₃ | 2 | 50 | 36 | 14 | 15.4 | 41,200 | 2.66 | 91.2 |
| B-44 | CH₃ | CH₃ | CH₃ | CH₃ | 4 | 65 | 21 | 14 | 14.8 | 43,100 | 2.86 | 91.2 |
| B-45 | CH₃ | CH₃ | CH₃ | CH₃ | 4 | 50 | 35 | 15 | 13.8 | 32,500 | 2.27 | 97.8 |

| | | | | | | | | | | | | | | |
|---|---|---|---|---|---|---|---|---|---|---|---|---|---|---|
| B-46 | CH₃ | CH₃ | CH₃ | CH₃ | 40 | 45 | 15 | 17.5 | 40,500 | 2.57 | 88.0 | | | |
| B-47 | CH₃ | CH₃ | CH₃ | CH₃ | 40 | 41 | 19 | 17.5 | 41,300 | 2.68 | 91.2 | | | |
| B-48 | CH₃ | H | CH₃ | CH₃ | 40 | 45 | 15 | 17.5 | 41,100 | 2.51 | 97.8 | | | |
| B-49 | CH₃ | H | CH₃ | CH₃ | 40 | 45 | 15 | 17.5 | 42,200 | 2.61 | 104.3 | | | |
| B-50 | H | CH₃ | CH₃ | CH₃ | 40 | 45 | 15 | 19.0 | 40,200 | 2.53 | 110.8 | | | |
| B-51 | H | CH₃ | C₂H₅ | CH₃ | 40 | 45 | 15 | 19.0 | 43,100 | 2.65 | 117.3 | | | |
| B-52 | H | H | CH₃ | CH₃ | 40 | 45 | 15 | 19.0 | 41,400 | 2.61 | 123.8 | | | |
| B-53 | H | H | C₂H₅ | CH₃ | 40 | 45 | 15 | 19.0 | 40,200 | 2.55 | 91.2 | | | |

### (Aqueous Liquid Medium (I))

The aqueous liquid medium in the aqueous colorant dispersion of the invention includes water, and may further include a water-soluble organic solvent. The water-soluble organic solvent may be used as an anti-drying agent, a moistening agent, or a penetration promoter.
An anti-drying agent may be used in order to prevent clogging caused by drying of an inkjet ink containing the aqueous colorant dispersion at an ink ejection port of the nozzle. A water-soluble organic solvent having a lower vapor pressure than that of water is preferable as an anti-drying agent or a moistening agent.
A water-soluble organic solvent may be used suitably as a penetration promoter so as to better penetrate the inkjet ink into paper.
The "water-soluble organic solvent" is an organic solvent that has a solubility of 1% by mass or higher in water at 20°C.

Examples of the water-soluble organic solvent include: polyhydric alcohols (e.g., alkanediols) such as glycerin, 1,2,6-hexanetriol, trimethylolpropane, ethyleneglycol, propyleneglycol, diethyleneglycol, triethyleneglycol, tetraethyleneglycol, pentaethyleneglycol, dipropyleneglycol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; alkylalcohols having from 1 to 4 carbon atoms such as ethanol, methanol, butanol, propanol, and isopropanol; glycol ethers such as ethyleneglycol monomethyl ether, ethyleneglycol monoethyl ether, ethyleneglycol monobutyl ether, ethyleneglycol monomethyl ether acetate, diethyleneglycol monomethyl ether, diethyleneglycol monoethyl ether, diethyleneglycol mono-n-propyl ether, ethyleneglycol mono-isopropyl ether, diethyleneglycol mono-isopropyl ether, ethyleneglycol mono-n-butyl ether, ethyleneglycol mono-t-butyl ether, diethyleneglycol mono-t-butyl ether, 1-methyl-1-methoxybutanol, propyleneglycol monomethyl ether, propyleneglycol monoethyl ether, propyleneglycol mono-t-butyl ether, propyleneglycol mono-n-propyl ether, propyleneglycol mono-isopropyl ether, dipropyleneglycol monomethyl ether, dipropyleneglycol monoethyl ether, dipropyleneglycol mono-n-propyl ether, and dipropyleneglycol mono-isopropyl ether; 2-pyrrolidone; N-methyl-2-pyrrolidone; 1,3-dimethyl-2-imidazolidinone, formamide, acetamide, dimethylsulfoxide, sorbit, sorbitan, acetin, diacetin, triacetin, and sulfolane. These may be used singly, or in combination of two or more thereof.
A solid moistening agent may be added to the water-soluble organic solvent. Examples of the solid moistening agent include: saccharides such as glucose, mannose, fructose, ribose, xylose, arabinose, galactose, aldonic acid, glucitol, maltose, cellobiose, lactose, sucrose, trehalose, and maltotriose; sugar alcohols; hyaluronic acids; and ureas.

Polyhydric alcohols are useful as anti-drying agents or moistening agents. Examples of polyhydric alcohols include glycerin, ethyleneglycol, diethyleneglycol, triethyleneglycol, propyleneglycol, dipropyleneglycol, tripropyleneglycol, 1,3-butanediol, 2,3-butanediol, 1,4-butanediol, 3-methyl-1,3-butanediol, 1,5-pentanediol, tetraethyleneglycol, 1 ,6-hexanediol, 2-methyl-2,4-pentanediol, polyethyleneglycol, 1 ,2,4-butanetriol, and 1,2,6-hexanetriol. These may be used singly, or in combination of two or more thereof.

Polyol compounds are preferable as penetration promoters, and examples of aliphatic diols as polyol compounds include 2-ethyl-2-methyl-1,3-propanediol, 3,3-dimethyl-1,2-butanediol, 2,2-diethyl-1,3-propanediol, 2-methyl-2-propyl-1,3-propanediol, 2,4-dimethyl-2,4-pentanediol, 2,5-dimethyl-2,5-hexanediol, 5-hexene-1,2-diol, and 2-ethyl-1,3-hexanediol. Of these, 2-ethyl-1,3-hexanediol and 2,2,4-trimethyl-1,3-pentanediol are preferable.

In the invention, the water-soluble organic solvent may be used singly, or two or more thereof may be used in mixture. The content of water-soluble organic solvent may be from 1% by mass to 60% by mass, and more preferably from 5% by mass to 40% by mass, relative to the entire aqueous liquid medium.
The amount of water added in the invention is not particularly limited, and is preferably from 10% by mass to 99% by mass, more preferably from 30% by mass to 80% by mass, and still more preferably from 50% by mass to 70% by mass, relative to the entire aqueous liquid medium.
The content of the aqueous liquid medium in the aqueous colorant dispersion is preferably from 1% by mass to 70% by mass, more preferably from 2% by mass to 60% by mass, and particularly preferably from 5% by mass to 50% by mass, relative to the aqueous colorant dispersion, from the viewpoints of drying prevention, penetratability into a medium to which the aqueous colorant dispersion is applied, and liquid properties such as viscosity.
When the content of the aqueous liquid medium is within the above range, the drying speed of the aqueous colorant dispersion, penetratability into a medium to which the aqueous colorant dispersion is applied, and liquid properties such as viscosity can be controlled to be appropriate.

### (Method of Producing Aqueous Colorant Dispersion)

The method of producing an aqueous colorant dispersion according to the invention includes:
adding (mixing) a solution (III) containing water as a main component and a basic substance to a mixture (II) of the colorant (A), the polymer (B), and an organic solvent (C) capable of dissolving or dispersing the polymer (B) (a mixing-hydration process), and removing the organic solvent (C) (a solvent removal process).
According to the method of producing an aqueous colorant dispersion according to the invention, an aqueous colorant dispersion in which the colorant is finely dispersed and which has excellent stability over time and excellent storage stability is produced.

The organic solvent (C) is capable of dissolving or dispersing the polymer (B) in the invention. Further, the organic solvent (C) preferably has a certain degree of affinity for water. Specifically, the solubility of the organic solvent (C) in water is preferably from 10% by mass to 50% by mass at 20°C.

More specifically, the aqueous colorant dispersion of the invention may be produced by, for example, a production method including the following processes (1) and (2); however, the aqueous colorant dispersion of the invention may alternatively be produced by other methods.

Process (1): process of subjecting a mixture containing (i) a mixture containing the colorant (A), the polymer (B), and the organic solvent (C) capable of dissolving or dispersing the polymer (B), (ii) the solution (III) containing water as a main component and a basic substance, and (iii) water to mixing and a dispersing treatment Process (2): process of removing the organic solvent (C)

In the process (1), the polymer (B) are dissolved or dispersed in the organic solvent (C), thereby obtaining a mixture thereof. Thereafter, the colorant (A) is mixed with the resultant mixture, thereby obtaining a mixture (II) (a mixing process).
The solution (III) containing water as a main component and a basic substance, water, and, optionally, a surfactant and the like are added to the mixture (II), and subjected to a mixing and dispersing treatment, as a result of which an oil-in-water aqueous colorant dispersion is obtained.
The neutralization degree is not particularly limited. Usually, the finally-obtained aqueous colorant dispersion has, for example, a pH of from 4.5 to 10. The target pH may be determined based on the desired neutralization of the polymer (B) (such as a water-insoluble vinyl polymer).

The colorant (A), the polymer (B), and other additives used in the method of producing an aqueous colorant dispersion have the same definitions and the same preferable examples as described in the explanation of the aqueous colorant dispersion.

Preferable examples of the organic solvent (C) to be used in the invention include alcohol solvents, ketone solvents, and ether solvents. Examples of alcohol solvents include ethanol, isopropanol, n-butanol, tertiary butanol, isobutanol, and diacetonealcohol. Examples of ketone solvents include acetone, methyl ethyl ketone, diethyl ketone, and methyl isobutyl ketone. Examples of ether solvents include dibutyl ether, tetrahydrofuran, and dixane. Of these solvents, isopropanol, acetone, and methyl ethyl ketone are preferable, and methyl ethyl ketone is particularly preferable.
One of the organic solvent (C) may be used singly, or two or more of the organic solvent (C) may be used together.

In the production of the aqueous colorant dispersion, a kneading and dispersing treatment may be conducted while applying strong shear force, by using a two roll mill, a three roll mill, a ball mill, a trommel, a DISPER (tradename), a kneader, a cokneader, a homogenizer, a blender or a uniaxial or biaxial extruder.
The specifics of the kneading and dispersing are described in, for example, T.C. Patton "Paint Flow and Pigment Dispersion" (John Wiley and Sons Inc., 1964).
A fine-dispersing treatment may be conducted, as necessary, using beads that are made of glass, zirconia or the like and that have a particle diameter of from 0.01 mm to 1 mm, and using a vertical or horizontal sand grinder, a pin mill, a slit mill, a ultrasonic disperser or the like, so as to obtain the aqueous colorant dispersion.

In the method of producing an aqueous colorant dispersion according to the invention, the manner of removing the organic solvent is not particularly limited. The organic solvent may be removed by a known method such as distillation under reduced pressure.

The d95 particle diameter of the dispersed colorant particles formed by the method of producing an aqueous colorant dispersion according to the invention is preferably from 100 nm to less than 290 nm, more preferably from 120 nm to less than 270 nm, and still more preferably from 130 nm to less than 250 nm. A d95 particle diameter within the above range is preferable in improvement in coloring properties, dispersion stability, and ejection stability at the time of jetting (ejection properties).
The d95 particle diameter of the dispersed colorant particles described herein is a value measured using a dynamic light scattering method. Specifically, the d95 particle diameter of the obtained aqueous colorant dispersion was measured by a dynamic light scattering method using a Nanotrac particle size distribution measuring instrument UPA-EX150 (tradename, manufactured by NIKKISO CO., LTD.). Here, the d95 particle diameter is the particle diameter at which the cumulative particle number (cumulated from the smaller particle diameter side) reaches 95% of the total particle number in the cumulative number particle size distribution.

The aqueous colorant dispersion of the invention may be used in the below-described aqueous ink for inkjet recording, or in aqueous inks for writing utensils such as aqueous ballpoint pens and marker pens. In such applications, a low-volatile or non-volatile solvent among the water-soluble organic solvents described above may be added in order to prevent clogging of an inkjet nozzle or pen point due to drying. A volatile solvent may be added in order to enhance the penetratability into a recording medium.

### (Aqueous Ink for Inkjet Recording)

The aqueous ink for inkjet recording according to the invention (hereinafter sometimes referred to as "inkjet ink") includes the aqueous colorant dispersion of the invention.
The inkjet ink of the invention may be the aqueous colorant dispersion of the invention itself, or may be prepared by adding additives (e.g., anti-drying agent) such as those described above as necessary and diluting with the aqueous liquid medium (I).

The amount of colorant contained in the inkjet ink is preferably in the range of from 0.1 % by mass to 20% by mass, and more preferably in the range of from 0.5% by mass to 10% by mass, relative to the inkjet ink, from the viewpoint of ink coloring properties, storage stability, and ejection properties.

The amount of the polymer (B) contained in the inkjet ink is preferably in the range of from 1% by mass to 150% by mass, and more preferably from 5% by mass to 100% by mass, relative to the amount of colorant (particularly, pigment), from the viewpoints of the dispersion properties, storage stability, and ejection properties of the inkjet ink.

The inkjet ink of the invention may further contain resin particles in order to enhance the fixability and abrasion resistance of a print. Examples of resin particles that can be used in the invention include particles of any of the following: acrylic resins, vinyl acetate resins, styrene-butadiene resins, vinyl chloride resins, acrylic-styrenic resins, butadiene resins, styrenic resins, crosslinked acrylic resins, crosslinked styrenic resins, benzoguanamine resins, phenol resins, silicone resins, epoxy resins, urethane resins, paraffin resins, fluororesins, and latexes thereof. Preferable examples include acrylic resins, acrylic-styrenic resins, styrenic resins, crosslinked acrylic resins, crosslinked styrenic resins, and latexes thereof.
The weight average molecular weight of the resin is preferably from 10,000 to 200,000, and more preferably from 30,000 to 100,000.
The volume average particle diameter of the resin particles is preferably from 10 nm to 1 µm, more preferably from 10 nm to 200 nm, still more preferably from 20 nm to 100 nm, and particularly preferably from 20 nm to 50 nm.
The amount of the resin particles added is preferably from 0.5% by mass to 20% by mass, more preferably from 3% by mass to 20% by mass, and further preferably from 5% by mass to 15% by mass, relative to the entire mass of the inkjet ink.
The glass transition temperature Tg of the resin of the resin particles is preferably 30°C or higher, more preferably 40°C or higher, and still more preferably 50°C or higher.
The particle size distribution of the resin particles is not particularly limited, and may be a broad particle size distribution or a monodisperse particle size distribution. In an embodiment, two or more types of resin particles each having a monodisperse particle size distribution are used in mixture.

The inkjet ink of the invention may include other additives, as necessary, in addition to the above components. Examples of other additives include known additives such as UV absorbers, anti-fading agents, antimildew agents, pH adjusters, antirust agents, antioxidants, emulsion stabilizers, antiseptic agents, antiform agents, viscosity adjusters, dispersion stabilizers, chelating agents, and surface-tension controllers.

Examples of UV absorbers include benzophenone UV absorbes, benzotriazole UV absorbers, salicylate UV absorbers, cyanoacrylate UV absorbers and nickel complex salt UV absorbers.

Examples of anti-fading agents include various organic anti-fading agents and metal complex anti-fading agents. Examples of organic anti-fading agents include hydroquinones, alkoxyphenols, dialkoxyphenols, phenols, anilines, amines, indanes, chromans, alkoxyanilines, and heterocycles. Examples of metal complexes include nickel complexes and zinc complexes.

Examples of antimildew agents include sodium dehydroacetate, sodium benzoate, sodium pyridinethion-1-oxide, ethyl p-hydroxybenzoate, 1,2-benzisothiazolin-3-one, sodium sorbate, and sodium pentachlorophenol. The content of antimildew agent in the inkjet ink is preferably from 0.02% by mass to 1.00% by mass relative to the inkjet ink.

PH adjusters are not particularly limited as long as they are capable of adjusting the pH to a desired value without causing adverse influences on the inkjet ink to be produced, and the pH adjuster to be used may be selected appropriately in accordance with the purpose. Examples of pH adjusters include alcohol amines (such as diethanolamine, triethanolamine, and 2-amino-2-ethyl-1,3-propanediol), alkali metal hydroxides (such as lithium hydroxide, sodium hydroxide, and potassium hydroxide), ammonium hydroxides (such as ammonium hydroxide and quaternary ammonium hydroxide), phosphonium hydroxides, and alkali metal carbonates.

Examples of antirust agents include acidic sulfites, sodium thiosulfate, ammonium thiodiglycolate, diisopropylammonium nitrite, pentaerythritol tetranitrate, and discylohexylammonium nitrite.

Examples of antioxidants include phenol antioxidants (such as hindered phenol antioxidants), amine antioxidants, sulfur-containing antioxidants, and phosphorus-containing antioxidants.

Examples of chelating agents include sodium ethylenediamine tetraacetate, sodium nitrilotriacetate, sodium hydroxyethylethylenediamine triacetate, sodium diethylenetriamine pentaacetate, and sodium uramil diacetate.

Examples of surface-tension controllers include nonionic, cationic, anionic, and betaine surfactants. The amount of surface-tension controller to be added is preferably such that the surface tension of the inkjet ink is adjusted to be in the range of from 20 mN/m to 60 mN/m, more preferably from 20 mN/m to 45 mN/m, and still more preferably from 25 mN/m to 40 mN/m, from the viewpoint of favorable ejection by inkjet.
A compound having both a hydrophilic moiety and a hydrophobic moiety within a molecule thereof, for example, may be used effectively as the surfactant in the invention, and any of an anionic surfactant, a cationic surfactant, an amphoteric surfactant, or a nonionic surfactant may be used. Further, the above polymer compound (polymeric dispersant) may be used as a surfactant.

Examples of anionic surfactants include sodium dodecylbenzenesulfonate, sodium laurylsulfate, sodium alkyldiphenyletherdisulfonate, sodium alkylnaphthalenesulfonate, sodium dialkylsulfosuccinate, sodium stearate, potassium oleate, sodium dioctylsulfosuccinate, sodium polyoxyethylene alkyl ether sulfate, sodium polyoxyethylene alkyl ether sulfate, sodium polyoxyethylene alkyl phenyl ether sulfate, sodium dialkylsulfosuccinate, sodium stearate, sodium oleate, and sodium t-octylphenoxyethoxypolyethoxyethylsulfate. These may be used singly, or in combination of two or more thereof.
Examples of nonionic surfactants include polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, t-octylphenoxyethyl polyethoxyethanol, and nonylphenoxyethyl polyethoxyethanol. These may be used singly, or in combination of two or more thereof.
Examples of cationic surfactants include tetraalkylammonium salts, alkylamine salts, benzalkonium salts, alkylpyridium salts, and imidazolium salts. Specific examples thereof include dihydroxyethylstearylamine, 2-heptadecenyl-hydroxyethylimidazoline, lauryldimethylbenzylammonium chloride, cetylpyridinium chloride, and stearamide methylpyridium chloride.

The amount of surfactant contained in the inkjet ink is not particularly limited, and is preferably from 1% by mass or more, more preferably from 1% by mass to 10% by mass, and still more preferably from 1% by mass to 3% by mass, relative to the entire mass of the inkjet ink.

When the application of the inkjet ink is performed by an inkjet method, the viscosity of the inkjet ink is preferably from 1 mPa·s to 30 mPa·s, more preferably from 1 mPa·s to 20 mPa·s, and particularly preferably from 2.5 mPa·s to 15 mPa·s, from the viewpoints of ejection stability and aggregation speed. Here, the viscosity of the inkjet ink is a value measured at 25°C using an E-type viscometer.

The pH of the inkjet ink is preferably in the range of from 7 to 10. When the pH is within the above range, storage stability is improved, and corrosion of members of an inkjet recording apparatus in which the inkjet ink is used is suppressed.
The pH of the inkjet ink may be controlled by using any of the basic substances described in the section (explanation) of the aqueous colorant dispersion.

A low-volatile or non-volatile solvent among the water-soluble organic solvents described above may be added to the inkjet ink of the invention in order to prevent clogging of an inkjet nozzle due to drying. A volatile solvent may be added to the inkjet ink in order to enhance penetratability into a recording medium. A surfactant may be added in order to adjust the surface tension of the ink to an appropriate surface tension.

### EXAMPLES

The present invention is more specifically described below by way of examples. However, the examples should not be construed as limiting the invention.

### Synthesis Example 1: Synthesis of Polymer B-1

A polymer B-1 was synthesized according to the following scheme.

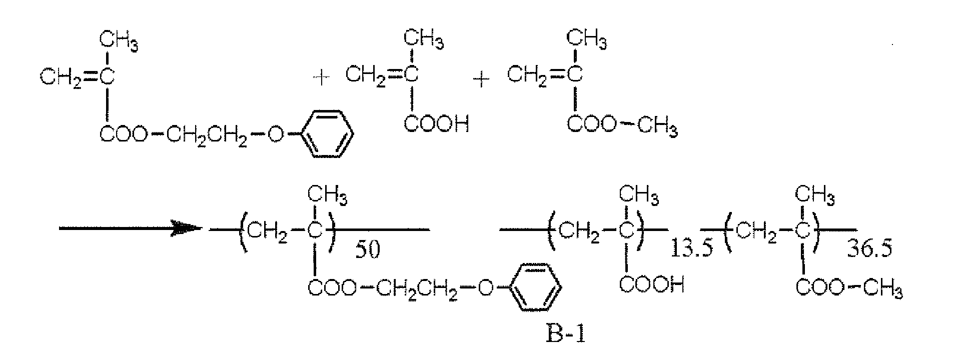

33 g of methyl ethyl ketone were added into a 500 ml three-necked flask equipped with an agitator and a condenser tube, and was heated to 75 °C under nitrogen atmosphere. A solution of 2 g of dimethyl-2,2'-azobisisobutyrate, 50 g of phenoxyethyl methacrylate, 13.5 g of methacrylic acid, and 36.5 g of methyl methacrylate dissolved in 70 g of methyl ethyl ketone was dripped into the flask over 3 hours. After completion of the dripping, the contents of the flask were allowed to further react for 1 hour, and then a solution of 0.2 g of dimethyl 2,2'-azobisisobutyrate dissolved in 2 g of methyl ethyl ketone was added thereto. The contents of the flask were heated to 78 °C, and maintained at that temperature for 4 hours. The resultant reaction solution was re-precipitated in an excess amount of hexane twice, and a precipitated polymer was dried to obtain 95 g of polymer B-1.
The composition of the obtained polymer was confirmed by ¹H-NMR, and the weight average molecular weight (Mw) thereof as measured by GPC was 40,300. Further, the acid value of the polymer (hereinafter referred to as "dispersant polymer") as determined by the method described in the JIS Standard (specifically, JIS K 0070:1992) was 88.0 mgKOH/g.

### Synthesis Example 2: Synthesis of Polymers B-2 to B-34 and Comparative Compounds

Other polymers B-2 to B-34 employed in Examples and comparative compounds C-1 to C-4 were synthesized in a manner similar to the synthesis method of Synthesis Example 1. Control of the molecular weights of the polymers was conducted by controlling the addition amount of dimethyl 2,2'-azobisisobutyrate as an initiator, and control of the acid values of the polymers was conducted by controlling the ratio between the addition amounts of the monomers. The structures of the polymers other than B-1 and comparative compounds are shown in Table 1 below.

### Synthesis Example 3: Synthesis of Comparative Compound D-3

A comparative compound (D-3) was synthesized from 50 g of phenoxyethyl methacrylate, 10 g of methacrylic acid, 35 g of methyl methacrylate, and 5 g of polyethyleneglycol monomethacrylate as monomers, in a manner similar to the synthesis method employed in Synthesis Example 1. The molecular weight was controlled by adjusting the addition amount of dimethyl 2,2'-azobis isobutyrate, which is an initiator. The molecular weight Mw of the resultant polymer was 40,100, and the acid value thereof was 65.2 mgKOH/g.

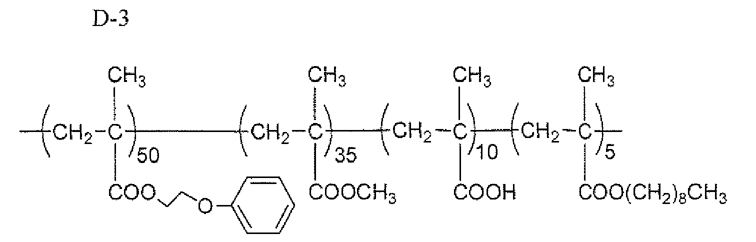

### Example 1

### (Preparation of Pigment-containing Resin Particle Dispersion (Pigment Dispersion E-4))

10 parts by mass of Pigment Blue 15:3 (PB15:3 manufactured by Dainichiseika Color and Chemicals Mfg. Co., Ltd., which is phthalocyanine blue A-220), 5 parts by mass of the polymer B-2, and 42 parts by mass of methyl ethyl ketone were mixed, and 6.2 parts by mass of 1N NaOH aqueous solution and 87.2 parts by mass of ion-exchange water were further mixed therewith, and dispersed for from 2 to 6 hours in a bead mill using zirconia beads having a diameter of 0.1 mm.
The methyl ethyl ketone was removed from the resultant dispersion at 55°C under reduced pressure, and a part of water was further removed, as a result of which a pigment-containing resin particle dispersion having a pigment concentration of 10.2% by mass was obtained. Then, the pigment-containing resin particle dispersion was subjected to a centrifugal separation at 5,000 rpm for 30 minutes using a centrifugal separator (05P-21 (tradename) manufactured by Hitachi Ltd.). Thereafter, ion-exchange water was added thereto, thereby preparing a pigment dispersion liquid having a pigment concentration of 15% by mass, and the pigment dispersion liquid was pressure-filtered through a 2.5µm membrane filter (manufactured by Toyo Roshi Kaisha Ltd.). Then, ion-exchange water was added thereto to adjust the pigment concentration to 4% by mass, as a result of which a pigment dispersion E-4, which is an aqueous colorant dispersion according to the invention, was obtained.

### Preparation of Pigment Dispersion E-1 to E-3 and E-5 to E-35

Pigment dispersions E-1 to E-3 and E-5 to E-35 as aqueous colorant dispersions according to the invention were prepared in the same manner as the preparation of the pigment dispersion E-4, except that the ingredients shown in Table 1 were used in place of the polymer B-2 and Pigment Blue 15:3.

The specifics of the pigments shown in Table 1 are as follows:
C.I. Pigment Red 122 (PR122, manufactured by BASF Japan Ltd., tradename: CROMOPHTAL JET MAGENTA DMQ)
C.I. Pigment Yellow 74 (PY74, manufactured by BASF Japan Ltd., tradename: IRGALITE YELLOW GS)
Carbon Black (CB, manufactured by Degussa Japan Co., Ltd., tradename: NIPEX180-IQ)

### Preparation of Aqueous Ink

A pigment dispersion-containing composition having the following composition was prepared using the pigment dispersion E-4 obtained above, and the composition was subjected to centrifugal separation (at from 10,000 to 20,000 rpm for from 30 minutes to 2 hours), as a result of which an aqueous ink (an aqueous ink for inkjet recording) F-4 was obtained.

### Composition

| | |
|---|---|
| The Pigment Dispersion E-4 | 40 parts by mass |
| Glycerin | 7 parts by mass |
| Diethyleneglycol | 9 parts by mass |
| Triethanolamine | 1 part by mass |
| OLFINE E1010 (manufactured by Nissin Chemical Industry Co., Ltd.) | 1 part by mass |
| Triethyleneglycol monobutyl ether | 9 parts by mass |
| Ion-exchange water | 34 parts by mass |

The pH of the aqueous ink F-4 as measured by a pH meter WM-50EG (tradename, manufactured by DKK-TOA Corporation) was 8.6.

Aqueous inks F-1 to F-3 and F-5 to F-35 were prepared in the same manner as the preparation of the aqueous ink F-4, except for using corresponding pigment dispersions E-1 to E-3 and E-5 to E-35, respectively, in place of the pigment dispersion E-4.

### Preparation of Comparative Pigment Dispersions E-36 to E-42

Pigment dispersions E-36 to E-42 were prepared in the same manner as the preparation of the pigment dispersion E-4, except that the polymer B-2 was replaced by the polymer C-1 shown in Table 1, the polymer C-2 shown in Table 1, the polymer C-3 shown in Table 1, the polymer C-4 shown in Table 1, the copolymer A described in paragraph [0043] of Japanese Patent No. 4,103,713 (hereinafter referred to as "D-1"), the copolymer described in paragraph [0052] (production example 1) of JP-A No. 2006-176623 (hereinafter referred to as "D-2"), and the comparative compound D-3, respectively.

### Preparation of Comparative Aqueous Inks F-36 to F-42

Aqueous inks F-36 to F-42 were prepared in the same manner as the preparation of the aqueous ink F-4, except that the pigment dispersion E-4 was replaced by the pigment dispersions E-36 to E-42, respectively.

### Measurement and Evaluation of Pigment Dispersion (Aqueous Colorant Dispersion)

### (1) Measurement of d95 particle diameter

The d95 particle diameter of each of the obtained pigment dispersions was measured by a dynamic light scattering method using a Nanotrac particle size distribution measuring instrument UPA-EX150 (tradename, manufactured by NIKKISO CO., LTD.). Here, the d95 particle diameter is the particle diameter at which the cumulative particle number (cumulated from the smaller particle diameter side) reaches 95% of the total particle number in the cumulative number particle size distribution. The measurement results are shown in Table 2 below.

### <Measurement Condition>

10 ml of ion-exchange water was added to 10 µl of the dispersion so as to prepare a measurement solution, which was then measured at 25°C.

### (2) Stability of pigment dispersion over time

Each of the obtained pigment dispersions was left to stand in a sealed environment at 60°C for 28 days, and then the aggregation of the pigment particles and a viscosity increase were evaluated according to the following criteria based on results of measurements of d95 particle diameter and viscosity.

### <Evaluation Criteria>

A: changes in the d95 particle diameter of the pigment particles and viscosity are not observed.
B: slight changes in the d95 particle diameter of the pigment particles and viscosity are observed, but are at practically tolerable level.
C: moderate changes in the d95 particle diameter of the pigment particles and viscosity are observed, but are at practically tolerable level.
D: changes in the d95 particle diameter of the pigment particles and viscosity are observed, and are practically problematic level.

### <Measurement Conditions of d95 Particle Diameter>

The measurement of the d95 particle diameter was conducted in the same manner as the (1) above, and the measurement of the viscosity was conducted in the following manner.

### <Measurement Condition of Viscosity>

The viscosity of each of the obtained pigment dispersions was measured at 25 °C using a VISCOMETER TV-22 (tradename, manufactured by TOKI SANGYO CO. LTD).

### (3) Anti-sedimentation properties of pigment dispersion

13 ml of each of the obtained pigment dispersions was left to stand in a sealed burette at 23°C for 7 days, and then a measurement of the number of coarse particles having a diameter of 5 µm or more and a spectral absorption measurement were performed on each of an upper layer (3 ml) and a lower layer (10 ml).
The number of coarse particles having a diameter of 5 µm or more was measured using a flow-type particle image analysis instrument FPIA3000 (tradename, manufactured by SYSMEX CORPORATION).
The spectral absorption measurement was conducted using a UV and visible-light spectral photometer SHIMADZU UV-2450 (tradename, manufactured by Shimadzu Corporation) and using samples that were 10,000-fold dilution of the above upper layer liquid and lower layer liquid, respectively. The measurement results of both samples were evaluated according to the following evaluation criteria.

### -Evaluation Criteria-

A: Course particles having a diameter of 5 µm or more are not observed, the difference in spectral absorbance between the upper and lower layers is small, and sedimentation in the pigment dispersion is not observed.
B: Sedimentation in the pigment dispersion is slightly observed, but is at a practically tolerable level.
C: Sedimentation in the pigment dispersion is observed, and is practically problematic.

### Evaluation of Aqueous Ink

Printing was performed using an inkjet recording apparatus equipped with a 600dpi 256-nozzle test print head and using aqueous inks F-1 to F-42, and the following evaluations were conducted.

### 1. Ejection stability

When the printing using the inkjet recording apparatus was performed, prints were observed with the naked eyes from the initiation of the printing until the completion of the printing, so as to determine whether or not deviation of the flight line direction of the ink and mist occurred, and evaluation was conducted according to the following criteria.

### -Evaluation Criteria-

A: deviation of the flight line direction of the ink and mist occur, but the frequency thereof is so low as to be practically tolerable.
B: deviation of the flight line direction of the ink and mist occur, and the frequency thereof is not high but is higher than in the case of the grade A. The deviation of the flight line direction of the ink and mist may be practically problematic when a high-quality image is requested.
C: deviation of the flight line direction of the ink and mist occur frequently, and are practically problematic.

### 2. Ejection Recovery Property

After printing using the inkjet recording apparatus was performed, the inkjet recording apparatus was allowed to stand at 25°C and 65%RH (relative humidity) for 3 weeks during which the head portion was exposed to the air rather than covered with a covering. Then, ejection was performed again, during which the ejection state was observed. The ejection state was evaluated according to the following criteria.

### -Evaluation Criteria-

A: Ejection becomes possible again by performing a predetermined maintenance
B: Ejection becomes possible again by repeating a predetermined maintenance three times.
C: Ejection is not possible even when the predetermined maintenance is performed.
Here, the predetermined maintenance refers to an operation whereby ink is ejected by applying a pressure of 15Pa for the purpose of removing a clogging of the head.

**Table 1**

| | | | | | | | | | | | | | | | |
|---|---|---|---|---|---|---|---|---|---|---|---|---|---|---|---|
| 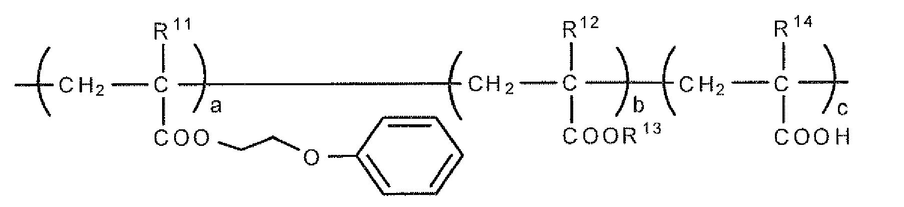 | | | | | | | | | | | | | | | |

| Aqueous Ink | Pigment Dispersion | | Dispersant Polymer | | | | | | | | | | | Pigment | Remarks |
|---|---|---|---|---|---|---|---|---|---|---|---|---|---|---|---|
| | | | R¹¹ | R¹² | R¹³ | R¹⁴ | a | b | c | Content of aromatic rings (Mass%) | *M*_{w} | *M*_{w}/*M*ₙ | Acid Value [mgKOH/g] | | |
| F-1 | E-1 | B-1 | CH₃ | CH₃ | CH₃ | CH₃ | 50 | 36.5 | 13.5 | 18.7 | 40,300 | 2.56 | 88.0 | PY-74 | Invention |
| F-2 | E-2 | B-2 | CH₃ | CH₃ | CH₃ | CH₃ | 50 | 36 | 14 | 18.7 | 41,200 | 2.66 | 91.2 | PY-74 | Invention |
| F-3 | E-3 | B-2 | CH₃ | CH₃ | CH₃ | CH₃ | 50 | 36 | 14 | 18.7 | 41,200 | 2.66 | 91.2 | PR-122 | Invention |
| F-4 | E-4 | B-2 | CH₃ | CH₃ | CH₃ | CH₃ | 50 | 36 | 14 | 18.7 | 41,200 | 2.66 | 91.2 | PB-15:3 | Invention |
| F-5 | E-5 | B-2 | CH₃ | CH₃ | CH₃ | CH₃ | 50 | 36 | 14 | 18.7 | 41,200 | 2.66 | 91.2 | CB | Invention |
| F-6 | E-6 | B-3 | CH₃ | CH₃ | CH₃ | CH₃ | 50 | 35 | 15 | 18.7 | 40,500 | 2.57 | 97.8 | PY-74 | Invention |
| F-7 | E-7 | B-3 | CH₃ | CH₃ | CH₃ | CH₃ | 50 | 35 | 15 | 18.7 | 40,500 | 2.57 | 97.8 | PR-122 | Invention |
| F-8 | E-8 | B-3 | CH₃ | CH₃ | CH₃ | CH₃ | 50 | 35 | 15 | 18.7 | 40,500 | 2.57 | 97.8 | PB-15:3 | Invention |
| F-9 | E-9 | B-3 | CH₃ | CH₃ | CH₃ | CH₃ | 50 | 35 | 15 | 18.7 | 40,500 | 2.57 | 97.8 | CB | Invention |
| F-10 | E-10 | B-4 | CH₃ | CH₃ | CH₃ | CH₃ | 50 | 34 | 16 | 18.7 | 40,100 | 2.46 | 104.3 | PY-74 | Invention |
| F-11 | E-11 | B-4 | CH₃ | CH₃ | CH₃ | CH₃ | 50 | 34 | 16 | 18.7 | 40,100 | 2.46 | 104.3 | PR-122 | Invention |
| F-12 | E-12 | B-4 | CH₃ | CH₃ | CH₃ | CH₃ | 50 | 34 | 16 | 18.7 | 40,100 | 2.46 | 104.3 | PB-15:3 | Invention |
| F-13 | E-13 | B-4 | CH₃ | CH₃ | CH₃ | CH₃ | 50 | 34 | 16 | 18.7 | 40,100 | 2.46 | 104.3 | CB | Invention |
| F-14 | E-14 | B-5 | CH₃ | CH₃ | CH₃ | CH₃ | 50 | 33 | 17 | 18.7 | 42,000 | 2.69 | 110.8 | PY-74 | Invention |
| F-15 | E-15 | B-6 | CH₃ | CH₃ | CH₃ | CH₃ | 50 | 32 | 18 | 18.7 | 40.300 | 2.55 | 117.3 | PY-74 | Invention |
| | | | | | | | | | | | | | | | |
| F-16 | E-16 | B-7 | CH₃ | CH₃ | CH₃ | CH₃ | 50 | 31 | 19 | 18.7 | 41,300 | 2.68 | 123.8 | PY-74 | Invention |
| F-17 | E-11 | B-8 | CH₃ | CH₃ | CH₃ | CH₃ | 50 | 36 | 14 | 18.7 | 27,000 | 2.36 | 91.2 | PY-74 | Invention |
| F-18 | E-18 | B-9 | CH₃ | CH₃ | CH₃ | CH₃ | 50 | 36 | 14 | 18.7 | 33.000 | 2.42 | 91.2 | PY-74 | Invention |
| F-19 | E-19 | B-10 | CH₃ | CH₃ | CH₃ | CH₃ | 50 | 36 | 14 | 18.7 | 50,100 | 2.69 | 91.2 | PY-74 | Invention |
| F-20 | E-20 | B-11 | CH₃ | CH₃ | CH₃ | CH₃ | 50 | 36 | 14 | 18.7 | 65,000 | 2.72 | 91.2 | PY-74 | Invention |
| F-21 | E-21 | B-12 | CH₃ | CH₃ | CH₃ | CH₃ | 50 | 36 | 14 | 18.7 | 98,000 | 2.88 | 91.2 | PY-74 | Invention |
| F-22 | E-22 | B-13 | CH₃ | CH₃ | CH₃ | CH₃ | 50 | 35 | 15 | 18.7 | 35,000 | 2.39 | 97.8 | PY-74 | Invention |
| F-23 | E-23 | B-13 | CH₃ | CH₃ | CH₃ | CH₃ | 50 | 35 | 15 | 18.7 | 35,000 | 2.39 | 97.8 | PR-122 | Invention |
| F-24 | E-24 | B-13 | CH₃ | CH₃ | CH₃ | CH₃ | 50 | 35 | 15 | 18.7 | 35,000 | 2.39 | 97.8 | PB-15:3 | Invention |
| F-25 | E-25 | B-13 | CH₃ | CH₃ | CH₃ | CH₃ | 50 | 35 | 15 | 18.7 | 35,000 | 2.39 | 97.8 | CB | Invention |
| F-26 | E-26 | B-17 | CH₃ | CH₃ | CH₃ | CH₃ | 50 | 34 | 16 | 18.7 | 35,000 | 2.43 | 104.3 | PY-74 | Invention |
| F-27 | E-27 | B-18 | CH₃ | CH₃ | CH₃ | CH₃ | 50 | 34 | 16 | 18.7 | 52,200 | 2.67 | 104.3 | PY-74 | Invention |
| F-28 | E-28 | B-19 | CH₃ | CH₃ | CH₃ | CH₃ | 50 | 34 | 16 | 18.7 | 63,000 | 2.69 | 104.3 | PY-74 | Invention |
| F-29 | E-29 | B-20 | CH₃ | CH₃ | CH₃ | CH₃ | 50 | 34 | 16 | 18.7 | 93,000 | 2.83 | 104.3 | PY-74 | Invention |
| F-30 | E-30 | B-21 | CH₃ | CH₃ | CH₃ | CH₃ | 54 | 32 | 14 | 20.2 | 41,200 | 2.58 | 91.2 | PY-74 | Intention |
| F-31 | E-31 | B-22 | CH₃ | CH₃ | CH₃ | CH₃ | 46 | 40 | 14 | 17.2 | 39,000 | 2.49 | 91.2 | PY-74 | Invention |
| F-32 | E-32 | B-23 | CH₃ | CH₃ | CH₃ | CH₃ | 35 | 51 | 14 | 13.1 | 40,200 | 2.53 | 91.2 | PY-74 | Invention |
| F-33 | E-33 | B-30 | H | CH₃ | CH₃ | CH₃ | 49 | 36 | 15 | 19.8 | 30,600 | 2.33 | 97.8 | PY-74 | Invention |
| F-34 | E-34 | B-32 | H | CH₃ | C₂H₅ | CH₃ | 49 | 36 | 15 | 19.8 | 33,900 | 2.34 | 97.8 | PY-74 | Invention |
| F-35 | E-35 | B-34 | H | CH₃ | CH₃ | H | 49 | 36 | 15 | 19.8 | 35,000 | 2.41 | 116.8 | PY-74 | Invention |
| F-36 | E-36 | C-1 | CH₃ | CH₃ | CH₃ | CH₃ | 50 | 41 | 9 | 18.7 | 29,500 | 2.00 | 58.8 | PY-74 | Comparative Example |
| F-37 | E-37 | C-2 | CH₃ | CH₃ | CH₃ | CH₃ | 50 | 25 | 25 | 18.7 | 41,000 | 2.83 | 162.9 | PY-74 | Comparative Example |
| F-38 | E-38 | C-3 | CH₃ | CH₃ | CH₃ | CH₃ | 60 | 26 | 14 | 22.4 | 41,500 | 2.59 | 91.2 | PY-74 | Comparative Example |
| F-39 | E-39 | C-4 | CH₃ | CH₃ | CH₃ | CH₃ | 25 | 57 | 14 | 9.3 | 40,100 | 2.35 | 91.2 | PY-74 | Comparative Example |
| F-40 | E-40 | D-1 | -- | -- | -- | -- | -- | -- | -- | -- | 28,500 | 2.19 | 29.0 | PY-74 | Comparative Example |
| F-41 | E-41 | D-2 | -- | -- | -- | -- | -- | -- | -- | -- | 132,800 | 4.15 | 65.2 | PY-74 | Comparative Example |
| F-42 | E-42 | D-3 | -- | -- | -- | -- | -- | -- | -- | -- | 40,100 | 2.39 | 65.2 | PY-74 | Comparative Example |

| | | | | | | | | | | | | | | | |
|---|---|---|---|---|---|---|---|---|---|---|---|---|---|---|---|
| * Content of aromatic rings indicates the proportion (mass%) of the aromatic rings relative to the entire mass of the polymer, | | | | | | | | | | | | | | | |

**Table 2**

| Aqueous ink | Pigment dispersion | Evaluation of pigment dispersion | | | Continuous ejection properties | | Remarks |
|---|---|---|---|---|---|---|---|
| | | d95 particle diameter [nm] | Stability over time | Antisedimentation properties | Ejection stability | Ejection recovery properties | |
| F-1 | E-1 | 201 | B | B | A | A | Invention |
| F-2 | E-2 | 204 | A | A | A | A | Invention |
| F-3 | E-3 | 158 | A | A | A | A | Invention |
| F-4 | E-4 | 171 | A | A | A | A | Invention |
| F-5 | E-5 | 160 | B | B | A | A | Invention |
| F-6 | E-6 | 203 | A | A | A | A | Invention |
| F-7 | E-7 | 162 | A | A | A | A | Intention |
| F-8 | E-8 | 170 | A | A | A | A | Invention |
| F-9 | E-9 | 161 | B | B | A | A | Intention |
| F-10 | E-10 | 205 | A | A | A | A | Invention |
| F-11 | E-11 | 161 | A | A | A | A | Intention |
| F-12 | E-12 | 172 | A | A | A | A | Invention |
| F-13 | E-13 | 163 | B | B | A | A | Invention |
| F-14 | E-14 | 203 | A | A | A | A | Invention |
| F-15 | E-15 | 205 | A | A | A | A | Invention |
| F-16 | E-16 | 219 | B | A | A | A | Invention |
| F-17 | E-17 | 218 | B | A | A | A | Invention |
| F-18 | E-18 | 203 | A | A | A | A | Invention |
| F-19 | E-18 | 201 | A | A | A | A | Invention |
| F-20 | E-20 | 203 | A | A | A | A | Invention |
| F-21 | E-21 | 208 | A | A | A | A | Invention |
| F-22 | E-22 | 204 | A | A | A | A | Invention |
| F-23 | E-23 | 163 | A | A | A | A | Invention |
| F-24 | E-24 | 172 | A | A | A | A | Invention |
| F-25 | E-25 | 164 | B | B | A | A | Invention |
| F-26 | E-26 | 204 | A | A | A | A | Invention |
| F-27 | E-27 | 206 | A | A | A | A | Invention |
| F-28 | E-28 | 205 | B | B | A | A | Invention |
| F-29 | E-29 | 209 | B | B | A | A | Invention |
| F-30 | E-30 | 219 | B | B | A | A | Invention |
| F-31 | E-31 | 218 | A | B | A | A | invention |
| F-32 | E-32 | 218 | B | B | A | A | Invention |
| F-33 | E-33 | 210 | A | B | A | A | Invention |
| F-34 | E-34 | 209 | A | B | A | A | Invention |
| F-35 | E-35 | 201 | A | B | A | A | Invention |
| F-36 | E-36 | 257 | B | C | B | B | Comparative Example |
| F-37 | E-37 | 320 | D | B | C | C | Comparative Example |
| F-38 | E-38 | 245 | D | C | B | B | Comparative Example |
| F-39 | E-39 | 257 | D | C | B | B | Comparative Example |
| F-40 | E-40 | 300 | D | C | C | C | Comparative Example |
| F-41 | E-41 | 258 | D | C | C | C | Comparative Example |
| F-42 | E-42 | 278 | C | C | B | C | Comparative Example |

As is apparent from Table 2, the pigment dispersions (aqueous colorant dispersions) according to the invention exhibited fineness of the dispersed pigment particles, excellent stability over time, and excellent anti-sedimentation properties.
Further, the aqueous inks according to the invention exhibited excellent ejection stability and ejection recovery property.
In contrast, comparative pigment dispersions E-36 to E-42 and the comparative aqueous inks F-36 to F-42 exhibited inferior properties in at least one of the evaluation items.
All publications, patent applications, and technical standards mentioned in this specification are herein incorporated by reference to the same extent as if each individual publication, patent application, or technical standard was specifically and individually indicated to be incorporated by reference.

## Claims

1. An aqueous colorant dispersion comprising a colorant, a polymer (B) having an acid value of 85 mgKOH/g or higher, and an aqueous liquid medium, wherein the polymer (B) is a copolymer including at least one hydrophobic structural unit (a) which contains an aromatic ring linked to an atom in the main chain of the polymer (B) via a linking group, and comprising at least one hydrophilic structural unit at a content of from 12% by mass to 20% by mass relative to the entire mass of the polymer (B), wherein the content of the aromatic ring is from 10% by mass to less than 21% by mass relative to the entire mass of the polymer (B).

2. The aqueous colorant dispersion according to claim 1, wherein the at least one hydrophobic structural unit (a) includes a structural unit represented by the following Formula (1): 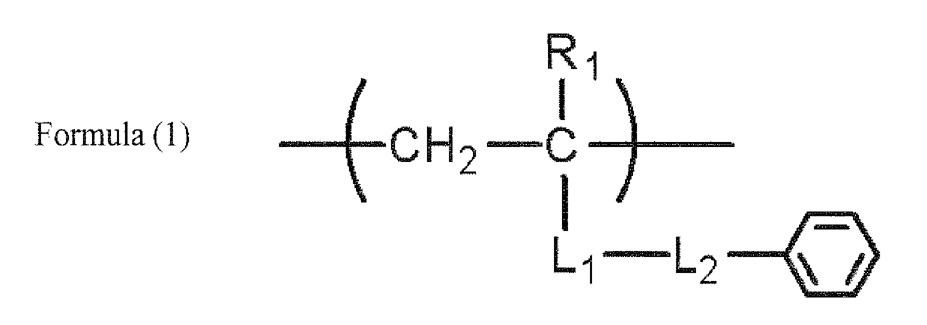 wherein, in Formula (1), R₁ represents a hydrogen atom, a methyl group, or a halogen atom; L₁ represents *-COO-, *-OCO-, *-CONR₂- *-O-, or a substituted or unsubstituted phenylene group; R₂ represents a hydrogen atom or an alkyl group having from 1 to 10 carbon atoms; * represents a bonding to the main chain; and L₂ represents a single bond or a divalent linking group having from 1 to 30 carbon atoms.

3. The aqueous colorant dispersion according to claim 1 or 2, wherein the at least one hydrophobic structural unit (a) includes at least one of a structural unit derived from phenoxyethyl acrylate or a structural unit derived from phenoxyethyl methacrylate.

4. The aqueous colorant dispersion according to any one of claims 1 to 3, wherein the at least one hydrophobic structural unit (a) includes a structural unit derived from phenoxyethyl acrylate or phenoxyethyl methacrylate, and the total proportion of structural units derived from phenoxyethyl acrylate and structural units derived from phenoxyethyl methacrylate is from 40% by mass to 53% by mass relative to the polymer (B).

5. The aqueous colorant dispersion according to any one of claims 1 to 4, wherein the at least one hydrophilic structural unit has at least one anionic group selected from a carboxyl group, a phosphoric acid group, or a sulfonic acid group.

6. The aqueous colorant dispersion according to any one of claims I to 5, wherein the at least one hydrophilic structural unit includes at least one of a structural unit derived from acrylic acid or a structural unit derived from methacrylic acid.

7. The aqueous colorant dispersion according to any one of claims 1 to 6, wherein the acid value of the polymer (B) is from 85 mgKOH/g to 125 mgKOH/g.

8. The aqueous colorant dispersion according to any one of claims 1 to 7, wherein the polymer (B) further includes at least one hydrophobic structural unit derived from an acrylic or methacrylic ester of an alkyl having from 1 to 6 carbon atoms.

9. The aqueous colorant dispersion according to claim 8, wherein the at least one hydrophobic structural unit derived from an acrylic or methacrylic ester of an alkyl having from I to 6 carbon atoms includes at least one of a hydrophobic structural unit derived from methyl acrylate, a hydrophobic structural unit derived from methyl methacrylate, a hydrophobic structural unit derived from ethyl acrylate, or a hydrophobic structural unit derived from ethyl methacrylate.

10. The aqueous colorant dispersion according to any one of claims 1 to 9, wherein the polymer (B) has a weight average molecular weight (Mw) of from 30,000 to 100,000.

11. The aqueous colorant dispersion according to any one of claims 1 to 10, wherein the colorant is a pigment.

12. The aqueous colorant dispersion according to claim 11, wherein the colorant is a pigment having an azo skeleton or a quinacridone skeleton.

13. The aqueous colorant dispersion according to claim 12, wherein the colorant is at least one of C.I. Pigment Red 122 or C.I. Pigment Yellow 74.

14. A method of producing an aqueous colorant dispersion of any one of claims 1 to 13, comprising:
adding a solution (III) containing water as a main component and a basic substance to a mixture (II) of the colorant, the polymer (B), and an organic solvent; and
removing the organic solvent so as to produce the aqueous colorant dispersion.

15. An aqueous ink for inkjet recording, comprising the aqueous colorant dispersion of any one of claims 1 to 13.
